# EUROPEAN PATENT APPLICATION

(11) **EP 2 141 902 A1**
(43) Date of publication of application: **06.01.2010**
(21) Application number: 08757675.7
(22) Date of filing: 11.06.2008
(51) Int. Cl.: H04M 3/54

(54) **METHOD AND DEVICE FOR PROVIDING CALL FORWARDING SERVICE FOR USERS**

(30) Priority: 18.06.2007 CN 200710126753
(71) Applicant: Huawei Technologies Co., Ltd., Longgang District, Shenzhen Guangdong 518129 (CN)
(72) Inventor: ZHU, Dongming, Shenzhen Guangdong 518129 (CN); ZHANG, Hengliang, Shenzhen Guangdong 518129 (CN); YE, Songhai, Shenzhen Guangdong 518129 (CN); DING, Chunyan, Shenzhen Guangdong 518129 (CN)
(74) Representative: Kreuz, Georg Maria
(86) International application number: PCT/CN2008/071264
(87) International publication number: WO 2008/154842

(57) **Abstract**

A method and a device for providing a call forwarding service for users are provided. The method for providing a call forwarding service for users includes the following steps. An IP multimedia subsystem (IMS) network entity receives a call towards a user who accesses from a circuit switched (CS) domain; the IMS network entity acquires a current session connection state of the user and/or the user's desire; and the call forwarding service is provided according to the obtained session connection state of the user and/or the user's desire. Thus, a call forwarding service in an IMS domain for a called user who accesses from a CS domain is realized.

## Description

### FIELD OF THE TECHNOLOGY

The present invention relates to the field of communications, and more particularly to a method and a device for providing a call forwarding service for users, as well as a method for transferring a call forwarding notification message.

### BACKGROUND OF THE INVENTION

### I. Introduction to IP Multimedia Subsystem (IMS)

The IMS is a subsystem overlaid on an existing packet switched (PS) domain in a mobile switching network, which adopts the PS domain as a bearer channel for upper layer control signaling and media transmission, and introduces the Session Initiation Protocol (SIP) as a service control protocol. Thus, the IMS utilizes the characteristics of simplicity, ease of extension, and convenience in media combination of the SIP, and provides various multimedia services by separating service control from bearer control. The main functional entities of the IMS include Call Session Control Functions (CSCFs) adapted to provide functions of user login control, session control, and the like, an Application Server (AS) adapted to provide various logic control functions, a Home Subscriber Server (HSS) adapted to manage user subscription data collectively, and a Media Gateway Control Function (MGCF)/IMS-Media Gateway Function (IM-MGW) adapted to implement interconnection with a circuit switched network. A user accesses the IMS through a Proxy-CSCF (P-CSCF) of a current location, and the functions of session and service triggering and control as well as service control and interconnection with the AS are all completed by a Service-CSCF (S-CSCF) of a home domain to which the user logs.

The IMS is a term in the 3rd Generation Partnership Project (3GPP) and Telecommunications and Internet Converged Services and Protocols for Advanced Networking (Tispan). A similar multimedia subsystem is also defined in the 3rd Generation Partnership Project 2 (3GPP2), which is called a Multimedia Domain (MMD), and has a similar structure as the IMS. Therefore, for ease of description, the IMS is taken as an example in the following description, but apparently the following description is also applicable to the MMD.

### II. Introduction to IMS centralized service (ICS)

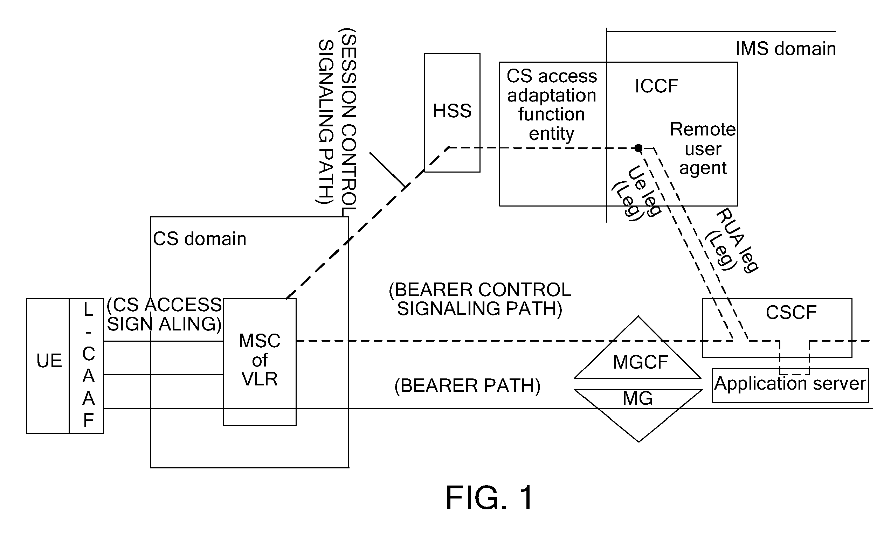

As the network evolves towards the IMS, a Circuit Switched (CS) domain and the IMS will coexist for a certain period of time. In this case, operators expect that the network has a control point capable of performing centralized control on services of the two domains, so as to reduce the deployment and management costs and providing consistent service experience. The point for providing the centralized control is generally located in the IMS network, which is realized by the AS. That is, when the user accesses through a CS network, the IMS network also provides services for the user. Currently, the ICS architecture is provided, as shown in FIG. 1.

Functions of the CSCF are the same as those described above. When a user equipment (UE) initiates or receives a call in the CS domain, the call is controlled and routed to the IMS network where the UE belongs to, so that the services are provided to the UE in the IMS domain. Meanwhile, in order to realize the interaction between the UE and a service control entity in the IMS network, a new entity, namely, IMS CS Control Function (ICCF), is added in the IMS network, which completes the adaptation control when the UE accesses the IMS network from the CS domain.

An interface Ix between the ICS UE and the ICCF is also referred to as an IMS CS Control Channel (ICCC), and different protocols may be adopted depending upon different network access environments, which are all called an ICCP. For example, when merely CS connection exists in FIG. 1, the interface Ix is an Unstructured Supplementary Service Data (USSD) interface, an SMS interface, or a DTMF interface between the UE and the ICCF; when PS connection exists, the interface Ix is an SIP protocol between the UE and the ICCF.

When implementing the present invention, the inventors found that, in the current ICS architecture, when a called user accesses from a CS domain, a call forwarding service cannot be provided for the user in an IMS domain. Furthermore, no call forwarding notification solution has ever been provided for users who access from the CS domain.

### SUMMARY OF THE INVENTION

Accordingly, the present invention is directed to a method and a device for providing a call forwarding service for users, which realizes a call forwarding service in an IMS domain for a called user who accesses from a CS domain.

The present invention is further directed to a method for transferring a call forwarding notification message, which realizes call forwarding notification for a user who accesses from a CS domain.

In an embodiment, the present invention provides a method for providing a call forwarding service for users, which includes the following steps. An IMS network entity receives a call towards a user who accesses from a CS domain, the IMS network entity acquires a current session connection state of the user and/or the user's desire, and a call forwarding service is provided according to the obtained session connection state of the user and/or the user's desire.

In an embodiment, the present invention provides an IMS network entity, which includes a receiving unit, adapted to receive a call towards a user who accesses from a CS domain; and an acquiring unit, adapted to acquire a current session connection state of the user and/or the user's desire after the receiving unit receives the call.

In an embodiment, the present invention provides a media gateway control function (MGCF), which includes:
a first converting unit, adapted to convert a 181 notification message (SIP call forwarding notification message) into a CS domain message carrying call forwarding information; and/or
a second converting unit, adapted to convert a CS domain message carrying User Unreachable information into an unreachable response message in the SIP; and/or
a third converting unit, adapted to convert a CS domain message carrying user no-reply information into a no-reply response message in the SIP.

In an embodiment, the present invention provides a method for transferring a call forwarding notification message, which includes the following steps. A call initiated by a user who accesses from a CS domain, or a call towards a user who accesses from a CS domain is forwarded; an IMS network entity receives a call forwarding notification message; the call forwarding notification message in an IMS domain is converted into a message that satisfies a receiving capability of the user who accesses from the CS domain; and the converted message is sent to the user who accesses from the CS domain.

In an embodiment, the present invention provides a method and a device for providing a call forwarding service for users, in which an IMS network entity receives a call towards a user who accesses from a CS domain, acquires a current session connection state of the user and/or the user's desire, and provides the call forwarding service for the called user who accesses from the CS domain according to the obtained connection state of the user and/or the user's desire.

In an embodiment, the present invention provides a method for transferring a call forwarding notification message, in which after a call initiated by a user who accesses from a CS domain or a call towards a user who accesses from the CS domain is forwarded, an IMS network entity receives a call forwarding notification message from an IMS domain; the IMS network entity instructs itself or instructs another network element to convert the call forwarding notification message in the IMS domain into a message satisfying a receiving capability of the user who accesses from the CS domain, and sends the converted message to the user who accesses from the CS domain, thereby realizing the call forwarding notification for the user who accesses from the CS domain.

### BRIEF DESCRIPTION OF THE DRAWINGS

FIG. 1 is a schematic view of the ICS architecture in the prior art;
FIG. 2 is a flow chart of a method for providing a call forwarding service for users according to an embodiment of the present invention;
FIG. 3 is a schematic view of an IMS network entity according to an embodiment of the present invention;
FIG. 4 is a schematic view of another IMS network entity according to an embodiment of the present invention;
FIG. 5 is a flow chart of a first embodiment of the present invention;
FIG. 6 is a flow chart of a second embodiment of the present invention;
FIG. 7 is a flow chart of a third embodiment of the present invention;
FIG. 8 is a flow chart of a fourth embodiment of the present invention;
FIG. 9 is a flow chart of a fifth embodiment of the present invention;
FIG. 10 is a flow chart of a sixth embodiment of the present invention;
FIG. 11 is a flow chart of a seventh embodiment of the present invention;
FIG. 12 is a flow chart of an eighth embodiment of the present invention;
FIG. 13 is a flow chart of a ninth embodiment of the present invention;
FIG. 14 is a flow chart of a tenth embodiment of the present invention;
FIG. 15 is a flow chart of an eleventh embodiment of the present invention;
FIG. 16 is a flow chart of a twelfth embodiment of the present invention;
FIG. 17 is a flow chart of a thirteenth embodiment of the present invention;
FIG. 18 is a flow chart of a fourteenth embodiment of the present invention;
FIG. 19 is a flow chart of a fifteenth embodiment of the present invention;
FIG. 20 is a flow chart of a sixteenth embodiment of the present invention;
FIG. 21 is a flow chart of a seventeenth embodiment of the present invention;
FIG. 22 is a flow chart of an eighteenth embodiment of the present invention;
FIG. 23 is a flow chart of a nineteenth embodiment of the present invention;
FIG. 24 is a flow chart of a twentieth embodiment of the present invention; and
FIG. 25 is a flow chart of a method for transferring a call forwarding notification message according to an embodiment of the present invention.

### DETAILED DESCRIPTION OF THE EMBODIMENTS

The call forwarding service enables a called user to forward a call to another phone number or the user's voice mailbox, which mainly includes the following forms.

Call Forwarding Unconditional (CFU) service: The CFU service enables the user to forward all his/her incoming calls to another preset phone number or the user's voice mail box.

Call Forwarding Busy (CFB) service: When the user is busy, the CFB service enables the user to forward his/her incoming calls to another preset phone number or the user's voice mail box. The "busy" includes two circumstances, that is, the network determines that the user is busy or the user decides that he/she is busy.

Call Forwarding on No Reply (CFNRy): When the user cannot or is unwilling to answer the phone call, the CFNRy service enables the user to forward the call to another preset phone number or the user's voice mailbox.

Call Forwarding on Mobile Subscriber Not Reachable (CFNRc): When the user is unreachable for certain reasons, the CFNRc service enables the network to automatically forward the call to a phone number preset by the user or the user's voice mailbox.

Communication Forwarding on Not Logged-in (CFNL) service: When the user is not logged in to the network, the CFNL service enables the network to automatically forward the call to another phone number preset by the user or the user's voice mailbox.

Call Deflection (CD) service: After the user receives an incoming call, the CD service enables the user to temporarily forward the incoming call to another phone number.

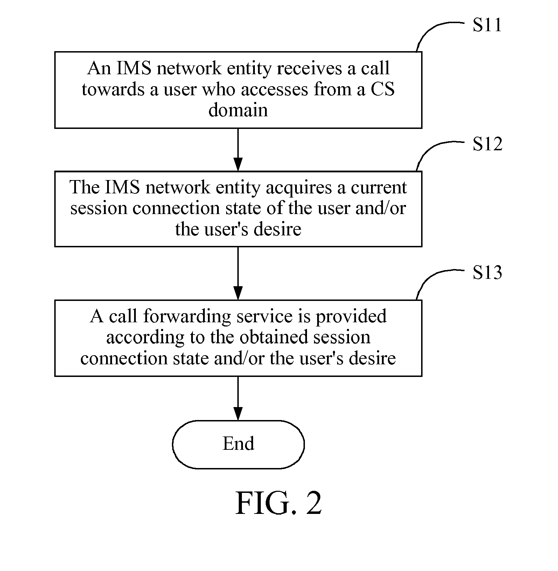

In an embodiment, the present invention provides a method for providing a call forwarding service. Referring to FIG. 2, the method includes the following main steps.

In step S11, an IMS network entity receives a call towards a user who accesses from a CS domain.

In step S12, the IMS network entity acquires a current session connection state of the user and/or the user's desire.

The IMS network entity acquires the session connection state or the user's desire through one of the following modes.

In mode a, a network entity in the CS domain or the user's UE actively reports the session connection state or the user's desire, and then the IMS network entity acquires the session connection state of the user or the user's desire according to the received report information.

In mode b, the IMS network entity interacts with an associated network entity with the session connection state or the user's desire stored therein or queries the IMS network entity to acquire the existing session information, and further acquires the session connection state or the user's desire according to the obtained information.

In step S13, the IMS network entity provides a call forwarding service according to the obtained session connection state and/or the user's desire.

The session connection state mainly indicates whether the session can reach the user's UE, or whether the user answers the session. The session connection state can be used to provide CFNRc and CFNRy services for the user. When the CFB and CD services are provided for the user, the user's desire and the session connection state may both be required. When the user is busy and is unwilling to answer the session but selects to perform the CFB service (the user decides he/she is busy), or the user intends to perform the CD service, the UE returns a message indicating that the user is busy or the user selects to perform the CD service to the network. When the IMS network entity is an application server for providing a call forwarding service, the IMS network entity directly provides the corresponding call forwarding service for the user according to the obtained current session connection state of the user or the user's desire. When the IMS network entity is not an application server for providing a call forwarding service, the IMS network entity notifies the current session connection state of the user or the user's desire to an application server for providing a call forwarding service for users according to the obtained current session connection state of the user or the user's desire, and then the application server for providing the call forwarding service provides the call forwarding service for the user.

In an embodiment, the present invention further provides an IMS network entity, which includes a receiving unit and an acquiring unit.

The receiving unit is adapted to receive a call towards a user who accesses from a CS domain.

The acquiring unit is adapted to acquire a current session connection state of the user and/or user's desire after the receiving unit receives the call. Specifically, the acquiring unit acquires the session connection state and/or the user's desire through one of the following modes.

In mode a, a CS domain network entity or a user's UE actively reports the session connection state of the user or the user's desire, and then the acquiring unit acquires the session connection state of the user or the user's desire according to the received report information.

In mode b, the acquiring unit interacts with an associated network entity with the session connection state or the user's desire stored therein or queries the IMS network entity to acquire the existing session information, and further acquires the session connection state or the user's desire according to the obtained information.

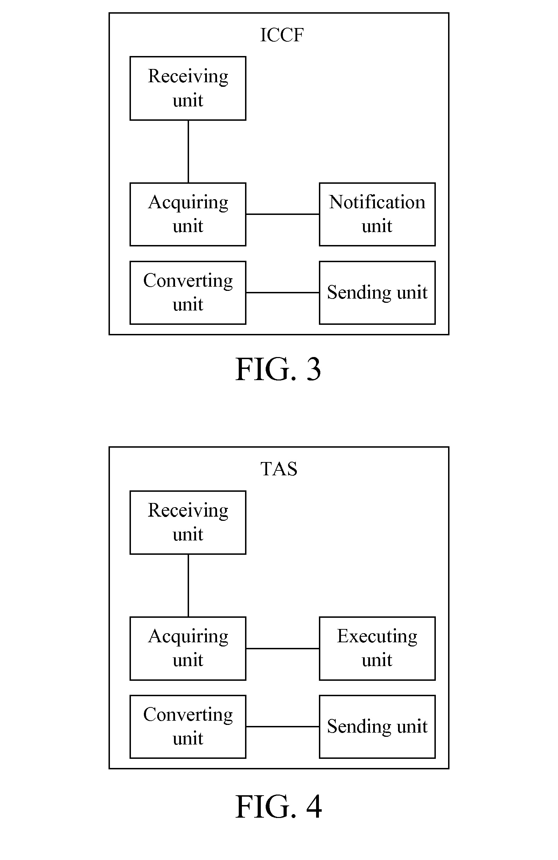

Based on the embodiment of the IMS network entity, if the IMS network entity is an ICCF, referring to FIG. 3, the IMS network entity further includes a notification unit. After the acquiring unit acquires the session connection state and/or the user's desire, the notification unit is adapted to notify the session connection state or the user's desire to an application server for providing a call forwarding service for users. Furthermore, the IMS network entity may further include a converting unit and a sending unit. The converting unit is adapted to convert a received call forwarding notification message in an IMS domain into a message satisfying a receiving capability of the user who accesses from the CS domain. The sending unit is adapted to send the message converted by the converting unit to the user who accesses from the CS domain.

Based on the embodiment of the IMS network entity, if the IMS network entity is a telephony application service (TAS), referring to FIG. 4, the IMS network entity further includes: an executing unit, adapted to provide the call forwarding service for the user according to the session connection state and/or the user's desire obtained by the acquiring unit. Furthermore, the IMS network entity further includes a converting unit and a sending unit. The converting unit is adapted to covert a received call forwarding notification message in an IMS domain into a message satisfying a receiving capability of the user who accesses from the CS domain. The sending unit is adapted to send the converted message to the user who accesses from the CS domain. In this embodiment, the notification unit notifies the session connection state and/or the user's desire to the executing unit.

In order to support the embodiments of the present invention, the present invention further provides a media gateway control function (MGCF) entity, which includes a first converting unit and/or a second converting unit and/or a third converting unit.

The first converting unit is adapted to covert an SIP call forwarding notification message into a CS domain message carrying call forwarding information, for example, a Call Progress (CPG) message.

Through the notification message, the user acquires a session state, which improves the user experience.

The second converting unit is adapted to convert a CS domain message carrying User Unreachable information into an unreachable response message in the SIP (for example, 503 response message, 408 response message, or 500 response message).

Through the message conversion, the IMS network entity learns that the session connection state is User Unreachable, so as to provide the CFNRc service for the user according to the session state.

The third converting unit is adapted to convert a CS domain message carrying user no-reply information into a no-reply response message in the SIP.

Through the message conversion, the IMS network entity learns that the session connection state is User No Reply, so as to provide the CFNRy service for the user according to the session state.

The specific descriptions are given below through 20 embodiments. In the following embodiments, the ICCF is, for example, separated from the TAS, and the process of providing a call forwarding service for the user is described. The ICCF and the TAS may be possibly combined, so as to interact with each other through internal messages thereof. In the following embodiments, the CS domain signaling of the user is merely, for example, an integrated services digital network (ISDN) user part (ISUP). In practice, a bearer independent call control (BICC) protocol or other signaling may also be the CS domain signaling of the user.

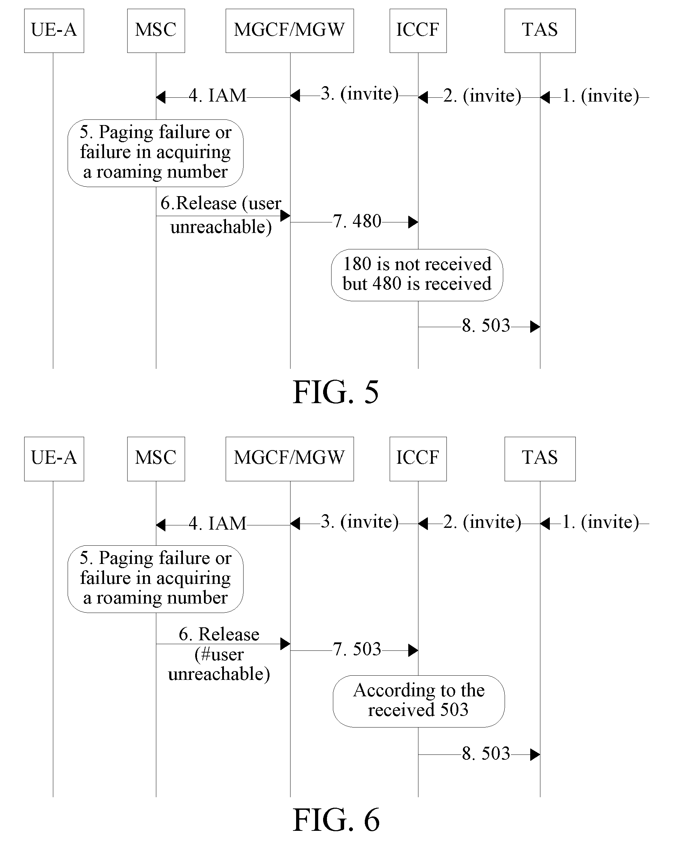

In a first embodiment, a first mode for providing a CFNRc service is disclosed, which includes the following steps, as shown in FIG. 5.

In steps 1-2, an ICCF receives a call towards a user's UE-A, in which an IAM indicates an initial address message.

In steps 3-4, the ICCF delivers the call through a CS domain.

In step 5, a mobile switching center (MSC) fails to page the user's UE-A or fails to acquire a roaming number.

In step 6, the MSC returns a Release message carrying a failure reason: paging failure (User Unreachable).

In step 7, an MGCF converts the Release message (User Unreachable) into an SIP 480 message (temporarily-unreachable response message), and sends the SIP 480 message to the ICCF.

In step 8, since the ICCF does not receive a 180 message (ringing response message), but receives the 480 message (temporarily-unreachable response message) at this time, the ICCF senses that the user's UE-A is "unreachable". Thus, the ICCF returns a 503 message to the TAS to notify the TAS that the user's UE-A is "unreachable", so that the TAS performs the CFNRc service.
[Note] 1. This embodiment takes the ICCF converting the Unreachable state of the user into the 503 message as an example, but the ICCF may further convert the User Unreachable state into another unreachable response message in the SIP, for example, a 408 message or a 500 message, and then transfers the response message to the TAS, so that the TAS also performs the CFNRc service.
2. The User Unreachable state includes two circumstances: when the MSC fails to acquire the roaming number of the user, it is determined that the user is unreachable, which is represented by #20; when the MSC pages the user, and the user gives no response, it is determined that the user is unreachable, which is represented by #18.
3. Different response messages are preset to be corresponding to different service logics respectively. For example, when the ICCF does not receive the SIP 180 message (ringing response message), but receives the 480 message (temporarily-unreachable response message), it is determined that the user is "unreachable", and for another example, when the TAS receives the 503 message, 408 message, or 500 message, the TAS performs the CFNRc service.

In a second embodiment, a second mode for providing a CFNRc service is disclosed, which includes the following steps, as shown in FIG. 6.

In steps 1-2, an ICCF receives a call towards a user's UE-A.

In steps 3-4, the ICCF delivers the call through a CS domain.

In step 5, an MSC fails to page the user's UE-A or fails to acquire a roaming number thereof.

In step 6, the MSC returns a Release message carrying a failure reason: paging failure (User Unreachable).

In step 7, an MGCF converts the Release message (User Unreachable) into an SIP 503 message, and sends the SIP 503 message to the ICCF.

In step 8, the ICCF determines that the user's UE-A is unreachable according to the received 503 message, and returns the 503 message to the TAS, so that the TAS performs the CFNRc service.
[Note] 1. The MGCF may also convert the Release message (User Unreachable) into another unreachable response message in the SIP, for example, an SIP 408 message or an SIP 500 message.
2. The User Unreachable state includes two circumstances: when the MSC fails to acquire the roaming number of the user, it is determined that the user is unreachable, which is represented by #20; when the MSC pages the user, and the user gives no response, it is determined that the user is unreachable, which is represented by #18.
3. Different response messages are preset to be corresponding to different service logics respectively. For example, when the ICCF receives the 503 message, 408 message, or 500 message, the ICCF sends the 503 message, 408 message, or 500 message to the TAS; and for another example, when the TAS receives the 503 message, 408 message, or 500 message, the TAS performs the CFNRc service.

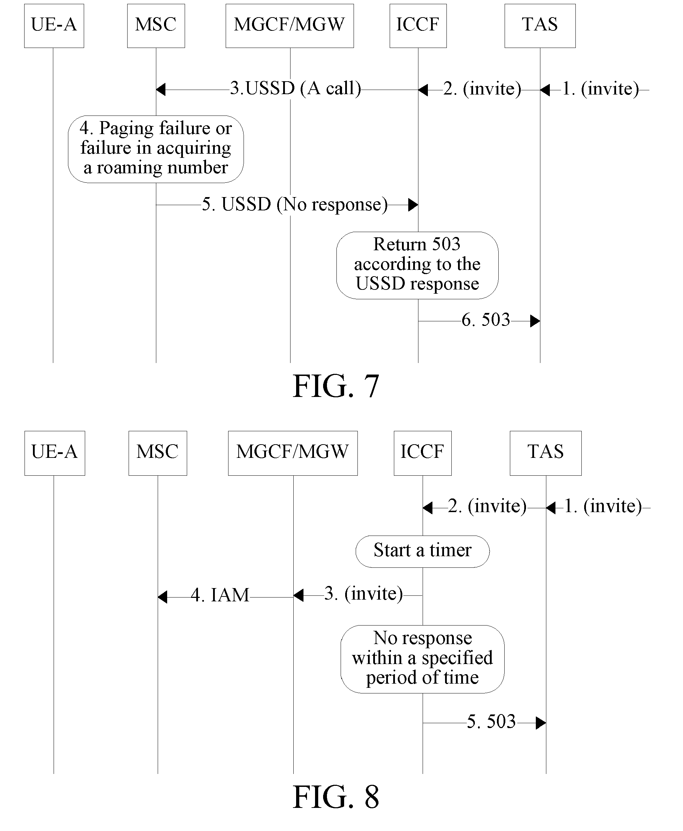

In a third embodiment, a third mode for providing a CFNRc service is disclosed, which includes the following steps, as shown in FIG. 7.

In steps 1-2, an ICCF receives a call towards a user's UE-A.

In step 3, the ICCF delivers the call to an MSC via a USSD message.

In step 4, the MSC sends a Paging message to page the user's UE-A, and the user's UE-A gives no response.

In step 5, the MSC returns a response message indicating that the user's UE-A gives no response to the ICCF through the USSD message.

In step 6, the ICCF learns that the user's UE-A is unreachable through the USSD response message, and returns a 503 message to a TAS, so that the TAS performs the CFNRc service.
[Note] 1. This embodiment takes the ICCF converting the User Unreachable state into the 503 response message as an example, but the ICCF may further convert the User Unreachable state into another unreachable response message in the SIP, for example, a 408 message or a 500 message, and then transfers the response message to the TAS, so that the TAS also performs the CFNRc service.
2. Different response messages are preset to be corresponding to different service logics respectively. For example, when the ICCF receives the USSD response message, it is determined that the user's UE-A is unreachable; for another example, when the TAS receives the 503 message, 408 message, or 500 message, the TAS performs the CFNRc service.
3. Alternatively, any CS domain network element on a transmission path of the USSD message sent from the ICCF, for example, an HLR, may also return a response message indicating that the user's UE-A is unreachable.

In a fourth embodiment, a fourth mode for providing a CFNRc service is disclosed, which includes the following steps, as shown in FIG. 8.

In steps 1-2, an ICCF receives a call towards a user's UE-A, and a timer is started.

In steps 3-4, the ICCF delivers the call through a CS domain.

In step 5, if the ICCF still does not receive a call response from the user's UE-A when the timer times out, the ICCF returns a 503 message to a TAS, which indicates that the user's UE-A is unreachable in the CS domain, so that the TAS performs the CFNRc service.
[Note] 1. This embodiment takes the ICCF converting the User Unreachable state into the 503 message as an example, but the ICCF may further convert the User Unreachable state into another unreachable response message in the SIP, for example, a 408 message or a 500 message, and then transfers the response message to the TAS, so that the TAS also performs the CFNRc service.
2. Different response messages are preset to be corresponding to different service logics respectively. For example, when the TAS receives the 503 message, 408 message, or 500 message, the TAS performs the CFNRc service.
3. This embodiment takes the ICCF starting the timer as an example, but the timer may also be started by the TAS as well, and if the TAS does not acquire a response from the user within a specified period of time, the TAS performs the CFNRc service.
4. This embodiment takes delivering a call through ISUP signaling as an example, but in actual implementations, the ICCF may also deliver the call through the USSD message.

In the embodiments about the CFNRc service, for example, the CFNRc service is performed once the user senses that the user is unreachable in the CS domain. In the actual implementation, a connection state in an IMS domain further needs to be sensed, and when it is found that the two domains are both unreachable, the CFNRc service is performed. For example, when a P-CSCF finds that the user is unreachable, the P-CSCF reports the User Unreachable state to the ICCF or the TAS in time.

In the above CFNRc service, the CFNRc service is performed once one of the user's UEs is tried and found to be unreachable. In the actual implementation, other UEs of the user may be further tried, and then if they are all unreachable, the CFNRc is performed.

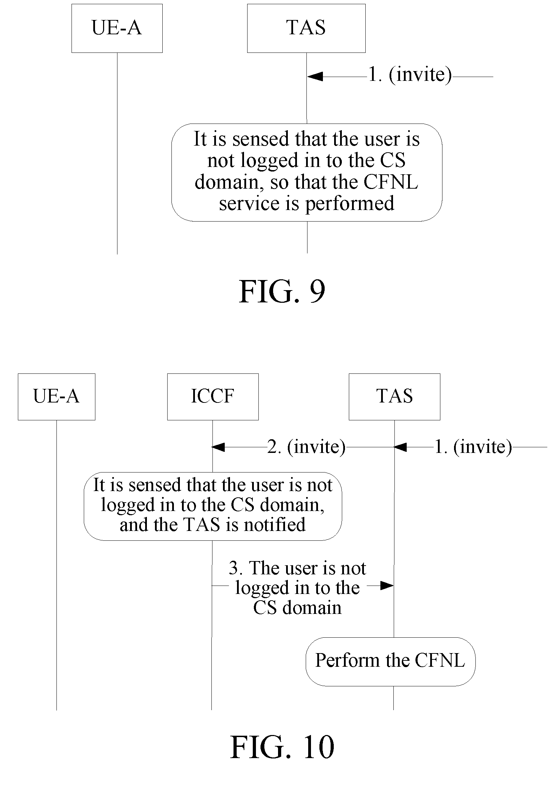

In a fifth embodiment, a first mode for providing a CFNL service is disclosed, which includes the following steps, as shown in FIG. 9.

In step 1, a TAS receives a call towards a user's UE-A, and acquires a connection state of the user's UE-A, that is, the user's UE-A is not logged in to a CS domain, so that the CFNL service is performed.

Specifically, the TAS acquires the connection state of the user's UE-A mainly in the following several manners.
1. Under a normal circumstance, when receiving the call, the TAS has already learned that the user is not logged in to the CS domain.
2. The TAS queries a logging state of the user from an HSS/HLR.

In a sixth embodiment, a second mode for providing a CFNL service is disclosed, which includes the following steps, as shown in FIG. 10.

In steps 1-2, an ICCF receives a call towards a user's UE-A.

In step 3, the ICCF acquires a connection state of the user's UE-A, that is, the user's UE-A is not logged in to a CS domain, and then the ICCF notifies a TAS, so that the TAS provides the CFNL service for the user's UE-A.

Specifically, the ICCF acquires the connection state of the user's UE-A mainly in the following several manners.
1. Under a normal circumstance, when receiving the call, the ICCF has already learned that the user is not logged in to the CS domain.
2. The ICCF queries a logging state of the user from an HSS/HLR.

In the embodiments about the CFNL service, for example, the CFNL service is performed once it is sensed that the user is not logged in to the CS domain. In the actual implementation, the CFNL service is not performed for the user until it is sensed that the user is also not logged in to an IMS domain. The ICCF or the TAS senses whether the user is logged in to the IMS domain through third party registration to acquire a logging state of the user in the IMS domain.

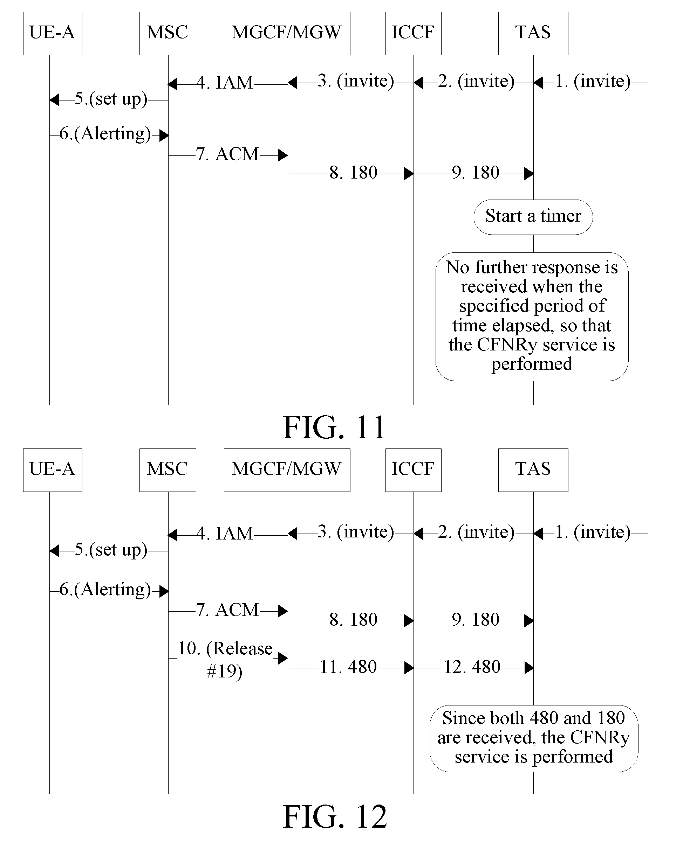

In a seventh embodiment, a first mode for providing a CFNRy service is disclosed, which includes the following steps, as shown in FIG. 11.

In steps 1-2, an ICCF receives a call towards a user's UE-A.

In steps 3-5, the ICCF delivers the call through a CS.

In step 6, the UE-A returns an Alerting message.

In step 7, after receiving the Alerting message, an MSC sends an Address Complete Message (ACM) to an MGCF.

In step 8, the MGCF converts the ACM sent by the MSC into a 180 message (ringing response message), and sends the 180 message to the ICCF.

In step 9, the ICCF forwards the 180 message (ringing response message) to a TAS; after the TAS receives the 180 message (ringing response message), a timer is started; if no further response is received from the UE-A within a specified period of time, the CFNRy service is performed.

The time setting of the timer aims at ensuring the consistency in the user experience, which may be the same as the time setting of the user in the CS domain.

In an eighth embodiment, a second mode for providing a CFNRy service is disclosed, which includes the following steps, as shown in FIG.12.

In steps 1-2, an ICCF receives a call towards a user's UE-A.

In steps 3-5, the ICCF delivers the call through a CS.

In step 6, the UE-A returns an Alerting message.

In step 7, after receiving the Alerting message, an MSC sends an ACM to an MGCF.

In step 8, the MGCF converts the ACM sent by the MSC into a 180 message (ringing response message), and sends the 180 message to the ICCF.

In step 9, the ICCF forwards the 180 message (ringing response message) to a TAS, and the TAS receives the 180 message (ringing response message).

In step 10, since the user's UE-A makes no reply, the MSC returns a Release message carrying a failure reason #19 indicating that the user's UE-A makes no reply.

In step 11, the MGCF converts the Release message into an SIP 480 message (temporarily-unreachable response message), and sends the 480 message to the ICCF.

In step 12, the ICCF forwards the 480 message (temporarily-unreachable response message) to the TAS, and the TAS determines that the user's UE-A makes no reply according to the received 180 message (ringing response message) and 480 message (temporarily-unreachable response message), so as to provide the CFNRy service for the user's UE-A.

[Note] Different response messages are preset to be corresponding to different service logics respectively. For example, when the MGCF receives the Release message, the MGCF converts the Release message into the SIP 480 message (temporarily-unreachable response message), and sends the 480 message to the ICCF. For another example, when the TAS receives the 180 message (ringing response message) and further receives the 480 message (temporarily-unreachable response message), the TAS provides the CFNRy service.

Furthermore, the MGCF may also convert the Release message into another SIP no-reply message indicating that the user makes "no reply", and then the TAS determines that the user makes no reply according to the converted message, so as to provide the CFNRy service for the user.

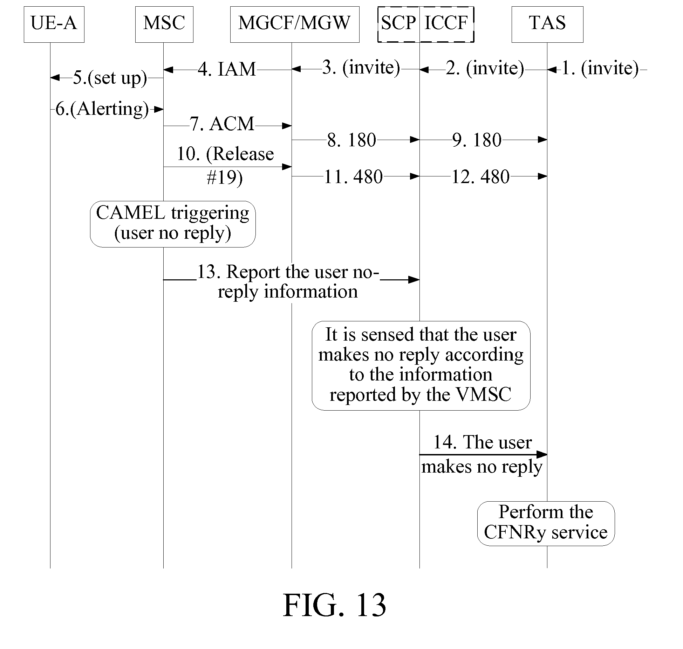

In a ninth embodiment, a third mode for providing a CFNRy service is disclosed, which includes the following steps, as shown in FIG. 13.

In steps 1-2, an ICCF receives a call towards a user's UE-A.

In steps 3-5, the ICCF delivers the call through a CS.

In step 6, the UE-A returns an Alerting message.

In step 7, after receiving the Alerting message, an MSC sends an ACM to an MGCF.

In step 8, the MGCF converts the ACM sent from the MSC into a 180 message (ringing response message), and sends the 180 message to the ICCF.

In step 9, the ICCF forwards the 180 message (ringing response message) to the TAS, and the TAS receives the 180 message (ringing response message).

In step 10, since the user's UE-A makes no reply, the MSC returns a Release message carrying a failure reason #19 indicating that the user's UE-A makes no reply.

In step 11, the MGCF converts the Release message into an SIP 480 message (temporarily-unreachable response message), and sends the 480 message to the ICCF.

In step 12, the ICCF forwards the 480 message (temporarily-unreachable response message) to the TAS.

In step 13, the MSC senses that the user makes no reply, and reports user no-reply information to the ICCF through Customized Applications for Mobile Network Enhanced Logic (CAMEL), in which a VMSC refers to a Visited Mobile Switching Center.

In step 14, the ICCF notifies the user no-reply information to the TAS according to the obtained information, and then the TAS performs the CFNRy service.

[Note] Steps 13 and 14 and steps 10, 11, and 12 may be performed at any sequence.

The ICCF may directly notify the TAS that the user is unreachable according to the User Unreachable information reported through the CAMEL, or may wait for a call response message from the user and then determine the User Unreachable information according to the call response message together with the CAMEL.

A Service Control Point (SCP) and the ICCF shown in FIG. 13 may be deployed in the same physical entity, or deployed separately. When being deployed together, the SCP and the ICCF exchange information through internal interfaces; and when being deployed separately, the SCP and the ICCF exchange information via existing protocols such as CAP, MAP, SIP and the like and private interfaces.

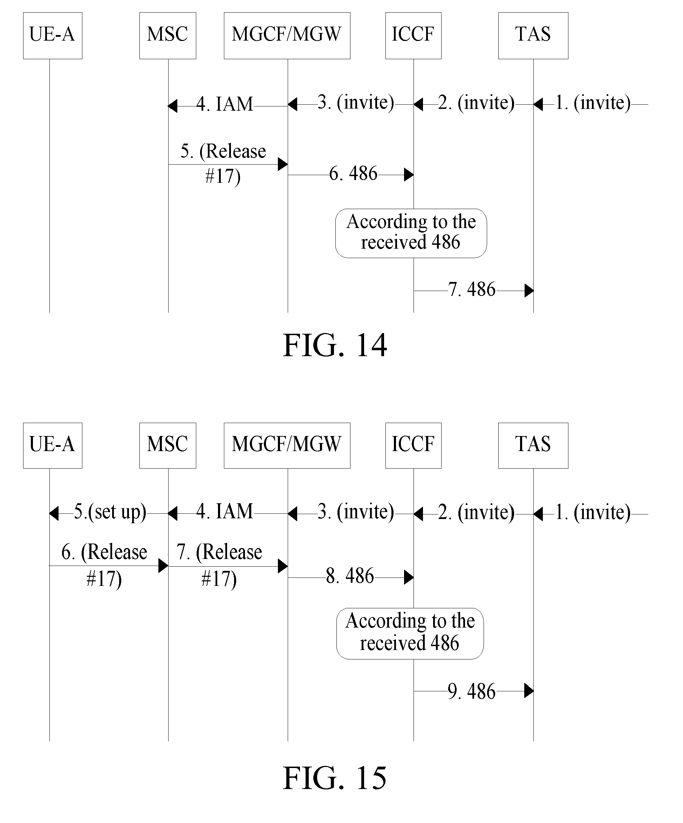

In a tenth embodiment, a first mode for providing a CFB service is disclosed, which includes the following steps, as shown in FIG. 14.

In steps 1-2, an ICCF receives a call towards a user's UE-A.

In steps 3-4, the ICCF delivers the call through a CS domain.

In step 5, an MSC determines that the user already has a session, and returns a Release (#17) message, indicating that the user is busy.

In step 6, an MGCF converts the Release (#17) message into a 486 message, and sends the 486 message to the ICCF.

In step 7, the ICCF senses that the user's UE-A is busy according to the received 486 message, and returns the 486 message to a TAS, and then the TAS performs the CFB service.

[Note] Different response messages are preset to be corresponding to different service logics respectively. For example, when the MGCF receives the Release (#17) message, the MGCF converts the Release message into the SIP 486 message, and sends the 486 message to the ICCF. For another example, when the TAS receives the 486 message, the TAS performs the CFB service.

In an eleventh embodiment, a second mode for providing a CFB service is disclosed, which includes the following steps, as shown in FIG. 15.

In steps 1-2, an ICCF receives a call towards a user's UE-A.

In steps 3-5, the ICCF delivers the call via a CS domain.

In steps 6-7, due to certain reasons (the user is unwilling to answer the call), the user returns User Busy information, so that the UE-A returns a Release (#17) message, indicating that the user is busy.

In step 8, an MGCF converts the Release (#17) message into a 486 message, and sends the 486 message to the ICCF.

In step 9, the ICCF senses that the user's UE-A is busy according to the received 486 message, and returns the 486 message to a TAS, so that the TAS performs the CFB service.

[Note] Different response messages are preset to be corresponding to different service logics respectively. For example, when the MGCF receives the Release (#17) message, the MGCF converts the Release message into the SIP 486 message, and sends the SIP 486 message to the ICCF. For another example, when the TAS receives the 486 message, the TAS performs the CFB service.

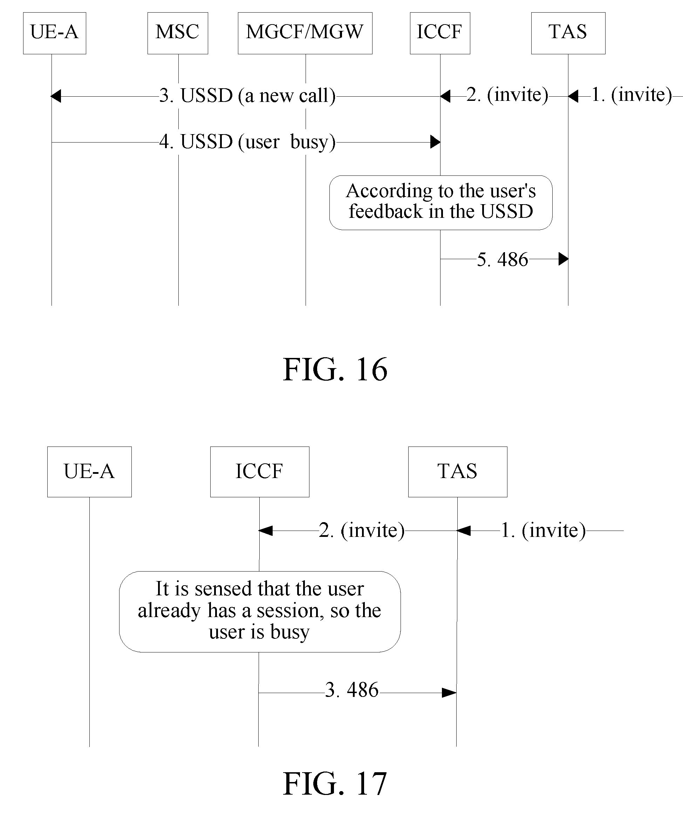

In a twelfth embodiment, a third mode for providing a CFB service is disclosed, which includes the following steps, as shown in FIG. 16.

In steps 1-2, an ICCF receives a call towards a user's UE-A.

In step 3, the ICCF notifies the user's UE-A about a new call through a USSD message.

In step 4, due to certain reasons, the user is unwilling to answer the call, so that the user returns User Busy information, and then the UE-A returns the information about the User Busy state to the ICCF via the USSD message.

In step 5, the ICCF learns that the user's UE-A is busy according to the information about the User Busy state returned through the USSD message, so as to return a 486 message to a TAS, indicating that the user's UE-A is busy, and then the TAS performs the CFB service.
[Note] 1. Different response messages are preset to be corresponding to different service logics respectively. For example, when the TAS receives the 486 message, the TAS performs the CFB service.
2. The user may further notify the ICCF through another IMS CS Control Protocol (ICCP) message, for example, an SMS message, a DTMF message, or an SIP message.

In a thirteenth embodiment, a fourth mode for providing a CFB service is disclosed, which includes the following steps, as shown in FIG. 17.

In steps 1-2, an ICCF receives a call towards a user's UE-A.

In step 3, the ICCF determines that the user's UE-A already has a session and is in a Busy state (since all sessions of the user are through the ICCF, the ICCF can learn that the user already has a session), and returns a 486 message to a TAS, so that the TAS provides the CFB service for the user's UE-A.

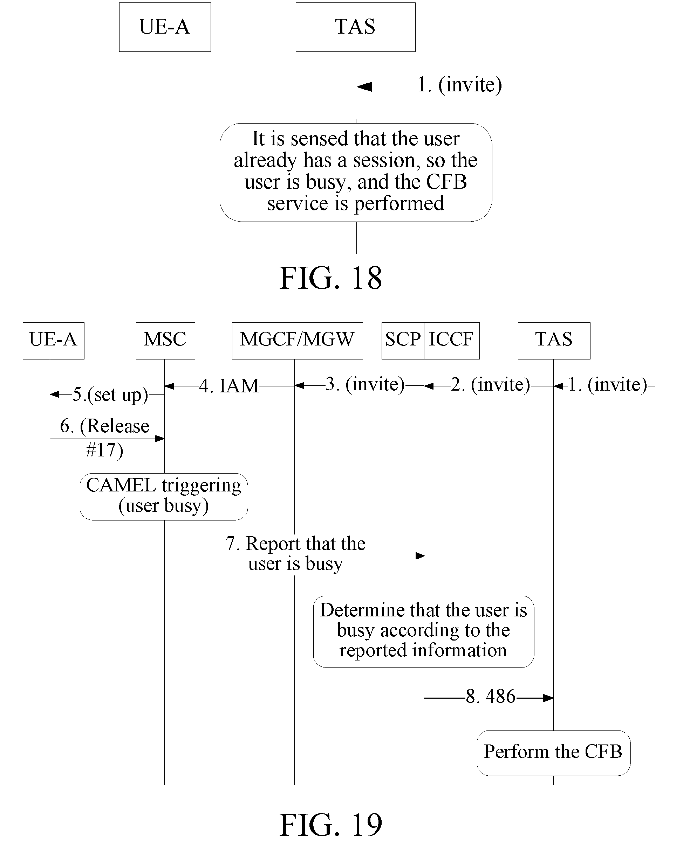

In a fourteenth embodiment, a fifth mode for providing a CFB service is disclosed, which includes the following step, as shown in FIG. 18.

In step 1, a TAS receives a call towards a user's UE-A, determines that the user's UE-A already has a session (if the user subscribers to the CFB service, all the sessions of the user are through the TAS, so that the TAS can learn that the user already has a session), and determines that the user's UE-A is in a Busy state, so as to directly provide the CFB service for the user's UE-A.

In a fifteenth embodiment, a sixth mode for providing a CFB service is disclosed, which includes the following steps, as shown in FIG. 19.

In steps 1-2, an ICCF receives a call towards a user's UE-A.

In steps 3-5, the ICCF delivers the call through a CS domain.

In step 6, due to certain reasons (the user is unwilling to answer the call), the user's UE-A cannot answer the call, so that the user's UE-A returns User Busy information, and the UE-A returns a Release (#17) message, indicating that the user is busy.

In step 7, an MSC determines that the user is busy, and triggers a CAMEL to report User Busy information to the ICCF.

In step 8, the ICCF learns that the user is busy according to the information reported by the MSC, and returns a 486 message to a TAS, indicating that the user is busy. The TAS performs the CFB service.

[Note] The ICCF may directly return a 186 message to the TAS, indicating that the user is busy according to the User Busy information reported through the CAMEL, or may wait for a call response and then determine the User Busy information according to the call response and the information reported through the CAMEL.

The User Busy information reported by the MSC may be determined by the MSC, that is, a network determined User Busy (NDUB), or determined by the user, that is, a user determined User Busy (UDUB).

An SCP and the ICCF shown in FIG. 19 may be deployed in the same physical entity or deployed separately. When being deployed together, the SCP and the ICCF exchange information through internal interfaces; and when being deployed separately, the SCP and the ICCF exchange information through existing protocols such as CAP, MAP, SIP and the like and private interfaces.

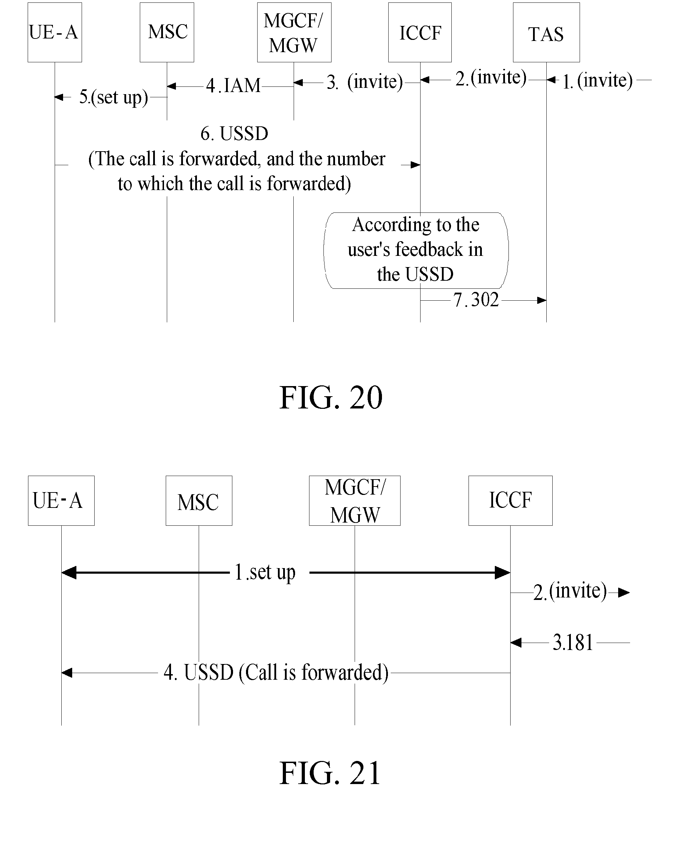

In a sixteenth embodiment, a first mode for providing a CD service is disclosed, which includes the following steps, as shown in FIG. 20.

In steps 1-2, an ICCF receives a call towards a user's UE-A.

In steps 3-5, the ICCF delivers the call through a CS domain.

In step 6, the user's UE-A requests to perform the CD service, and notifies the ICCF through a USSD message, in which the USSD message carries a number to which the user's UE-A requests to connect.

In step 7, the ICCF determines that the user's UE-A requests to perform the CD service according to the received USSD message, and converts the USSD message into a 302 message (the 302 message carries the number to which the user's UE-A requests to connect), and sends the 302 message to a TAS, so that the TAS performs the CD service for the user's UE-A.
[Note] 1. In step 6, the user may return the information that the user requests to perform the CD service through another ICCP message such as an SMS message, a DTMF message, or an SIP message.
2. Different response messages are preset to be corresponding to different service logics respectively. For example, when the TAS receives the 302 message, the TAS performs the CD service.

In a seventeenth embodiment, when a call initiated by a user who accesses from a CS domain is forwarded, a first process for transferring a call forwarding notification message includes the following steps, as shown in FIG. 21.

In steps 1-2, a user's UE-A initiates a call setup request.

In step 3, since the call initiated by the user's UE-A is forwarded by an opposite end, a 181 message (SIP call forwarding notification message) is returned to the user's UE-A, indicating that the call is forwarded.

In step 4, an ICCF converts the 181 message (SIP call forwarding notification message) into a USSD message, and notifies the user's UE-A that the call is forwarded.

[Note] The ICCF may notify the user through another ICCP message such as an SMS message, a DTMF message, or an SIP message.

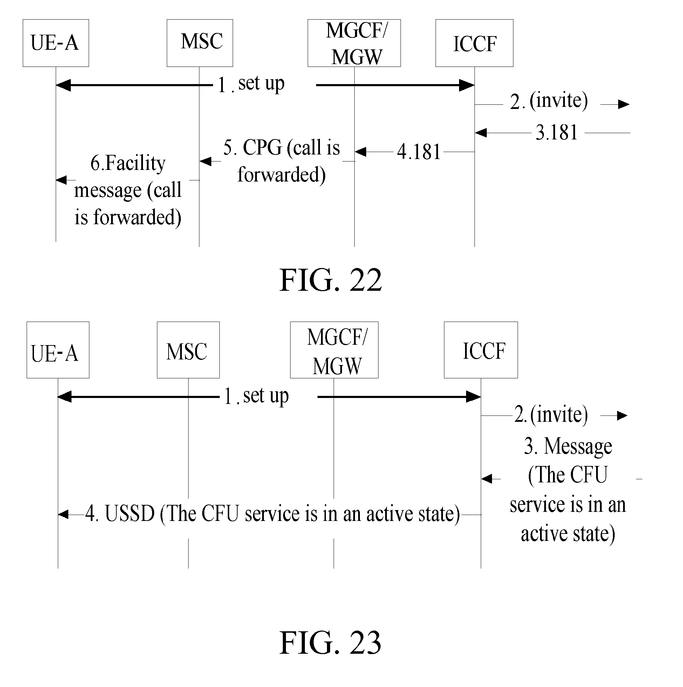

In an eighteenth embodiment, when a call initiated by a user who accesses from a CS domain is forwarded, a second process for transferring a call forwarding notification message includes the following steps, as shown in FIG. 22.

In steps 1-2, a user's UE-A initiates a call setup request.

In step 3, since the call initiated by the user's UE-A is forwarded by an opposite end, a 181 message (SIP call forwarding notification message) is returned to the user's UE-A, indicating that the call is forwarded.

In step 4, an ICCF sends the 181 message (SIP call forwarding notification message) to an MGCF.

In steps 5-6, the MGCF converts the 181 message (SIP call forwarding notification message) into a CPG message, and notifies the user's UE-A that the call is forwarded.

[Note] The CPG message is merely taken as an example herein, and the MGCF may further convert the 181 message (SIP call forwarding notification message) into another notification message.

In a nineteenth embodiment, when a CFU service of a user's UE-A who accesses from a CS domain is in an Active state, a third process for a network to notify the user's UE-A that the CFU service thereof is in an Active state includes the following steps, as shown in FIG. 23.

In steps 1-2, a user's UE-A initiates a call setup request.

In step 3, if the user's UE-A subscribes to a CFU service, and the CFU service is in an Active state, a TAS returns a Message to the user's UE-A, indicating that the CFU service of the user's UE-A is in an Active state.

In step 4, an ICCF receives the Message sent from the TAS to the user's UE-A, and notifies the user's UE-A that the CFU service thereof is in an Active state through a USSD message.

[Note] The ICCF may notify the user through another ICCP message such as an SMS message, a DTMF message, or an SIP message.

The CFU service is merely taken as an example herein, and other call forwarding services may adopt the same notification mode.

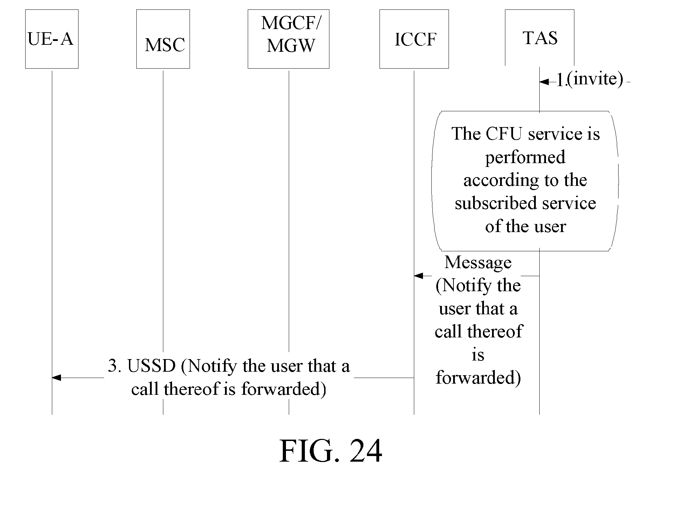

In a twentieth embodiment, when a call towards a user who accesses from a CS domain is forwarded, a process for notifying the user that a call thereof is forwarded includes the following steps, as shown in FIG. 24.

In step 1, a TAS receives a call towards a user's UE-A.

In step 2, since the user's UE-A subscribes to a CFU service, and the CFU service is in an Active state, the TAS performs the CFU service and forwards the call, and meanwhile notifies the user's UE-A through a Message that a call towards the user's UE-A is forwarded.

In step 3, an ICCF receives the Message sent from the TAS to the user's UE-A, and notifies the user's UE-A through a USSD message that a call towards the user's UE-A is forwarded.

[Note] The ICCF may notify the user through another ICCP message such as an SMS message, a DTMF message, or an SIP message.

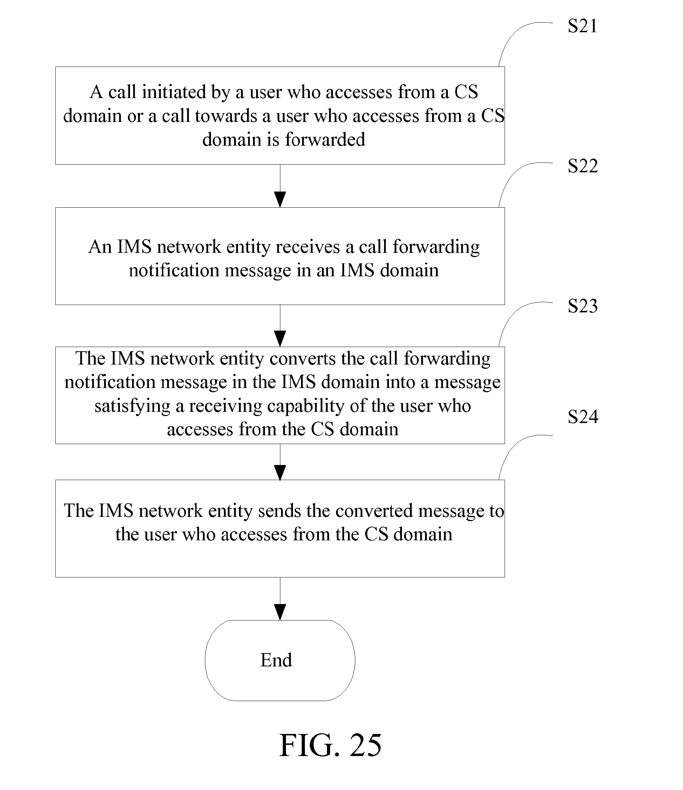

In order to implement the call forwarding notification for a user who accesses from a CS domain, and to provide desirable experience for the user who accesses from the CS domain, a method for transferring a call forwarding notification message is provided in an embodiment of the present invention, which mainly includes the following steps, as shown in FIG. 25.

In step S21, a call initiated by a user who accesses from a CS domain or a call towards a user who accesses from a CS domain is forwarded.

In step S22, an IMS network entity receives a call forwarding notification message in an IMS domain.

In step S23, the IMS network entity converts the call forwarding notification message in the IMS domain into a message satisfying a receiving capability of the user who accesses from the CS domain.

In step S24, the IMS network entity sends the converted message to the user who accesses from the CS domain.

If the call towards the user who accesses from the CS domain is forwarded, the user is notified in one of the following modes.

In mode 81, the IMS network entity converts a received SIP Message carrying call forwarding information into an ICCP message carrying the call forwarding information, and sends the ICCP message to the user.

When the call initiated by the user who accesses from the CS domain is forwarded, the user is notified in one of the following modes.

In mode 91, the IMS network entity converts a received 181 notification message (SIP call forwarding notification message) into an ICCP message carrying call forwarding information, and sends the ICCP message to the user.

In mode 92, the IMS network entity forwards the received 181 notification message (SIP call forwarding notification message) to an MGCF, and then the MGCF converts the 181 notification message (SIP call forwarding notification message) into a CS domain message carrying call forwarding information and sends the CS domain message to the user.

In mode 93, the IMS network entity converts the received SIP Message carrying information that a call forwarding service thereof is in an Active state into an ICCP message carrying information that a call forwarding service thereof is in an Active state, and sends the ICCP message to the user.

To sum up, in the embodiments of the present invention, a method and a device for providing a call forwarding service for users are provided. After an IMS network entity receives a call towards a user who accesses from a CS domain, the IMS network entity acquires a current session connection state of the user or the user's desire, so as to provide the call forwarding service for the called user who accesses from the CS domain according to the obtained session connection state of the user or the user's desire.

In addition, in the embodiments of the present invention, several implementation solutions are respectively provided for various call forwarding services, which better support the present invention.

In the method for transferring a call forwarding notification message according to an embodiment of the present invention, when a call initiated by a user who accesses from a CS domain or a call towards a user who accesses from a CS domain is forwarded, an IMS network entity receives a call forwarding notification message in an IMS domain, and then the IMS network entity converts or notifies another network element to convert the call forwarding notification message in the IMS domain into a message satisfying a receiving capability of the user who accesses from the CS domain, and then sends the converted message to the user who accesses from the CS domain, thereby implementing the call forwarding notification for the user who accesses from the CS domain.

It will be apparent to persons skilled in the art that various modifications and variations can be made to the present invention without departing from the scope of the invention. In view of the foregoing, it is intended that the present invention cover such modifications and variations provided they fall within the scope of the following claims and their equivalents.

## Claims

1. A method for providing a call forwarding service for users, comprising:
receiving, by an internet protocol (IP) multimedia subsystem (IMS) network entity, a call towards a user who accesses from a circuit switched (CS) domain;
acquiring, by the IMS network entity, a current session connection state of the user and/or the user's desire; and
providing the call forwarding service according to the obtained session connection state and/or the user's desire.

2. The method according to claim 1, wherein the acquiring, by the IMS network entity, the session connection state of the user or the user's desire comprises:
acquiring, by the IMS network entity, the session connection state of the user or the user's desire according to the received report information, if a CS domain network entity or the user's user equipment (UE) actively reports the session connection state of the user or the user's desire; or
acquiring, by the IMS network entity, the session connection state or the user's desire according to the obtained information, if the IMS network entity interacts with an associated network element with the session connection state or the user's desire stored therein or queries the IMS network entity to acquire the stored session information.

3. The method according to claim 1, wherein when the IMS network entity acquires that the current session connection state of the user is User Unreachable, a Call Forwarding on Mobile Subscriber Not Reachable (CFNRc) service is provided;
wherein the acquiring, by the IMS network entity, the current session connection state of the user comprises:
acquiring, by the IMS network entity, that the current session connection state of the user is User Unreachable, if the IMS network entity receives a temporarily-unreachable response message and does not receive a ringing response message before; or
acquiring, by the IMS network entity, that the current session connection state of the user is User Unreachable according to the received message, if a media gateway control function (MGCF) converts a CS domain message carrying User Unreachable information into an unreachable response message in a session initiation protocol (SIP) and sends the unreachable response message to the IMS network entity; or
acquiring, by the IMS network entity, that the current session connection state of the user is User Unreachable, if after the IMS network entity delivers the call in an IMS CS Control Protocol (ICCP) message through the CS domain, a response message carrying User Unreachable information is returned by any CS domain network element on a transmission path of the ICCP message; and
acquiring, by the IMS network entity, that the current session connection state of the user is User Unreachable, if after the IMS network entity delivers the call through the CS domain, no response is received from the user within a specified period of time.

4. The method according to claim 1, wherein when the IMS network entity acquires that the current session connection state of the user is that the user is not logged in, a Communication Forwarding on Not Logged-in (CFNL) service is provided;
wherein the acquiring, by the IMS network entity, the current session connection state of the user comprises:
acquiring, by the IMS network entity, that the current session connection state of the user is that the user is not logged-in, if the IMS network entity interacts with a network element with logging information of the user stored therein, or queries information stored in the IMS network entity, and acquires that the user is not logged-in.

5. The method according to claim 1, wherein when the IMS network entity acquires that the current session connection state of the user is User No Reply, a Call Forwarding on No Reply (CFNRy) service is provided;
wherein the acquiring, by the IMS network entity, the current session connection state of the user comprises:
acquiring, by the IMS network entity, that the current session connection state of the user is User No Reply, if after the IMS network entity receives a ringing response message, no further response is received from the user within a specified period of time; or
acquiring, by the IMS network entity, that the current session connection state of the user is User No Reply, if the IMS network entity subsequently receives, according to the received ringing response message, a temporarily-unreachable response message; or
the IMS network entity, that the current session connection state of the user is User No Reply according to the information reported through Customized Applications for Mobile Network Enhanced Logic (CAMEL), if a mobile switching center (MSC) reports user no-reply information to the IMS network entity through CAMEL.

6. The method according to claim 1, wherein when the IMS network entity acquires that the current session connection state of the user is User Busy, a Call Forwarding Busy (CFB) service is provided;
wherein the acquiring, by the IMS network entity, the current session connection state of the user comprises:
acquiring, by the IMS network entity, that the current session connection state of the user is User Busy according to a received SIP message; or
acquiring, by the IMS network entity, that the current session connection state of the user is User Busy, if after the IMS network entity delivers the call in an ICCP message through the CS domain, the IMS network entity receives an ICCP message carrying User Busy information returned by the user's UE; or
acquiring, by the IMS network entity, that the current session connection state of the user is User Busy, if the IMS network entity interacts with a network element with the session connection state of the user stored therein, or queries information stored in the IMS network entity, and acquires that the user already has a session; or
acquiring, by the IMS network entity, that the current session connection state of the user is User Busy according to the information reported through the CAMEL, if an MSC reports User Busy information to the IMS network entity through CAMEL.

7. The method according to claim 1, wherein when the IMS network entity acquires that the user's desire is that the user requests forwarding the call, a Call Deflection (CD) service is provided;
wherein the acquiring, by the IMS network entity, the user's desire comprises:
acquiring, by, the IMS network entity, that the user's desire is that the user requests forwarding the call, when the IMS network entity receives an ICCP message carrying a number to which the user requests to connect returned by the user.

8. The method according to claim 1, wherein the IMS network entity notifies the user that a call towards the user is forwarded in the following mode:
converting, by the IMS network entity, an SIP Message carrying call forwarding information to an ICCP message carrying the call forwarding information, and sending the ICCP message to the user.

9. The method according to claim 1, wherein a calling user accesses from a CS domain, and the IMS network entity notifies the calling user that a call initiated by the calling user is forwarded in one of the following modes:
converting, by the IMS network entity, an SIP call forwarding notification message into an ICCP message carrying call forwarding information, and sending the ICCP message to the calling user; or
forwarding, by the IMS network entity, an SIP call forwarding notification message to an MGCF, and then the MGCF converts the SIP call forwarding notification message into a CS domain message carrying call forwarding information, and then sending the CS domain message to the calling user; or
converting, by the IMS network entity, a received SIP Message carrying information that a call forwarding service thereof is in Active state into an ICCP message carrying information that the call forwarding service thereof is in the Active state, and sending the ICCP message to the user.

10. The method according to any one of claims 1 to 9, wherein;
if the IMS network entity is an application server adapted to provide a call forwarding service, the IMS network entity directly provides a corresponding call forwarding service for the user according to the obtained current session connection state of the user or the user's desire; or
if the IMS network entity is not an application server adapted to provide a call forwarding service, the IMS network entity notifies the session connection state of the user and/or the user's desire to an application server adapted to provide a call forwarding service for the user according to the obtained current session connection state of the user or the user's desire, and then the application server adapted to provide the call forwarding service provides the call forwarding service for the user.

11. An internet protocol (IP) multimedia subsystem (IMS) network entity, comprising:
a receiving unit, adapted to receive a call towards a user who accesses from a circuit switched (CS) domain; and
an acquiring unit, adapted to acquire a current session connection state of the user and/or the user's desire after the receiving unit receives the call.

12. The entity according to claim 11, wherein the IMS network entity is an IMS CS Control Function (ICCF), and further comprises a notification unit adapted to notify the session connection state or the user's desire to an application server adapted to provide a call forwarding service for the user according to the session connection state and/or the user's desire obtained by the acquiring unit.

13. The entity according to claim 11, wherein the IMS network entity is a telephony application service (TAS), and further comprises an executing unit adapted to provide a call forwarding service for the user according to the session connection state and/or the user's desire obtained by the acquiring unit.

14. The entity according to any one of claims 11 to 13, further comprising:
a converting unit, adapted to convert a received call forwarding notification message in an IMS domain into a message satisfying a receiving capability of the user who accesses from the CS domain; and
a sending unit, adapted to send the message converted by the converting unit to the user who accesses from the CS domain.

15. The entity according to any one of claims 11 to 13, wherein the acquiring unit acquires the session connection state or the user's desire in one of the following modes:
a CS domain network entity or the user's user equipment (UE) actively reports the session connection state or the user's desire, and then the acquiring unit acquires the session connection state or the user's desire according to a received report message; or
the acquiring unit interacts with an associated network element with the session connection state or the user's desire stored therein, or queries the IMS network entity to acquire stored session information, and further acquires the session connection state or the user's desire according to the obtained information.

16. A media gateway control function (MGCF), comprising:
a first converting unit, adapted to convert a session initiation protocol (SIP) call forwarding notification message into a circuit switched (CS) domain message carrying call forwarding information; and/or
a second converting unit, adapted to convert a CS domain message carrying user unreachable information into an unreachable response message in an SIP; and/or
a third converting unit, adapted to convert a CS domain message carrying user no-reply information of a user into a no-reply response message in an SIP.

17. A method for transferring a call forwarding notification message, comprising:
forwarding a call initiated by a user who accesses from a circuit switched (CS) domain or a call towards a user who accesses from a CS domain;
receiving, by an internet protocol (IP) multimedia subsystem (IMS) network entity, a call forwarding notification message in an IMS domain;
converting the call forwarding notification message in the IMS domain into a message satisfying a receiving capability of the user who accesses from the CS domain; and
sending the converted message to the user who accesses from the CS domain.

18. The method according to claim 17, wherein when the call towards the user who accesses from the CS domain is forwarded, the user is notified in the following mode:
in mode 81, the IMS network entity converts a received session initiation protocol (SIP) Message carrying call forwarding information into an IMS CS Control Protocol (ICCP) message carrying the call forwarding information, and sends the ICCP message to the user.

19. The method according to claim 17, wherein when the call initiated by the user who accesses from the CS domain is forwarded, the user is notified in one of the following modes:
in mode 91, the IMS network entity converts a received SIP call forwarding notification message into an ICCP message carrying call forwarding information, and sends the ICCP message to the user;
in mode 92, the IMS network entity forwards a received SIP call forwarding notification message to a media gateway control function (MGCF), and then the MGCF converts the SIP call forwarding notification message into a CS domain message carrying call forwarding information, and then sends the CS domain message to the user; and
in mode 93, the IMS network entity converts a received SIP Message carrying information that a call forwarding service thereof is in an active state into an ICCP message carrying information that the call forwarding service thereof is in the active state, and sends the ICCP message to the user.
